# EUROPÄISCHE PATENTSCHRIFT

(11) **EP 2 492 449 B1**
(45) Veröffentlichungstag und Bekanntmachung des Hinweises auf die Patenterteilung: **24.08.2016**
(21) Anmeldenummer: 12157110.3
(22) Anmeldetag: 27.02.2012
(51) Int. Cl.: F01D 11/00, F16J 15/08

(54) **Dichtungsanordnung für eine thermische Maschine**
Sealing arrangement for a thermal machine
Agencement de joint d'étanchéité pour une machine thermique

(30) Priorität: 28.02.2011 CH 3432011
(43) Veröffentlichungstag der Anmeldung: 29.08.2012
(73) Patentinhaber: General Electric Technology GmbH, 5400 Baden (CH)
(72) Erfinder: Szwedowicz, Jaroslaw, 5330 Bad Zurzach (CH); Irmisch, Stefan, 5452 Oberrohrdorf (CH); Mozharov, Alexey, 5415 Nussbaumen (CH)
(74) Vertreter: Bernotti, Andrea

(56) Entgegenhaltungen:
- EP-A1- 1 602 864
- EP-A1- 2 000 709
- EP-A2- 1 207 324
- EP-A2- 2 116 621
- DE-A1-102007 001 459
- GB-A- 2 467 582
- JP-A- 59 018 209
- JP-A- 60 111 004
- JP-A- 2009 203 948

## Beschreibung

### TECHNISCHES GEBIET

Die vorliegende Erfindung bezieht sich auf das Gebiet der Maschinenelemente im Zusammenhang mit thermischen Maschinen. Sie betrifft eine Dichtungsanordnung gemäss dem Oberbegriff der Ansprüche 1 und 13.

### STAND DER TECHNIK

In thermischen Maschinen wie z.B. Gasturbinen oder elektromechanischen Maschinen wie z.B. elektrischen Generatoren ist die Kühlung von thermisch belasteten Bauteilen ein wesentlicher Parameter für den Gesamtwirkungsgrad und die Lebensdauer des Systems. In den meisten Fällen ist das Kühlmedium Kühlluft; es kann aber auch Dampf aus einem Dampferzeuger für denselben Zweck benutzt werden. Die nachfolgend offenbarte Erfindung ist entsprechend auf alle Kühlmedien, unabhängig von der Versorgungsquelle, anwendbar, wird jedoch am Beispiel einer luftgekühlten Gasturbine erläutert.

In einer Gasturbine wird Luft durch einen zentrifugalen oder axialen Verdichter vom Umgebungsdruck auf Nenndruck komprimiert. Nach Kühlung der heissen Teile der Brennkammer wird der Hauptteil der verdichteten Luft zur Verbrennung von Brennstoff in der Brennkammer verwendet. Der Rest der verdichteten Luft wird an einer oder mehreren Stellen entlang oder am Ende des Verdichters entnommen und durch Kühlluftkanäle zu den heissen Teilen der Gasturbine geführt. In der Turbine wird das Kühlmittel für die interne oder externe Kühlung der Turbinenkomponenten, wie z.B. Leitschaufeln und Laufschaufeln, verwendet. Zusätzlich reduziert das Kühlmittel die Betriebstemperatur von nicht-rotierenden und rotierenden Bauteilen, wie z.B. der Schaufelfüsse oder Rotorscheiben, welche grossen Zentrifugalkräften ausgesetzt sind.

Ein Teil der Luft wird auch für Abdichtungszwecke eingesetzt, speziell zwischen rotierenden und stationären Teilen, indem die Luft durch einen Spalt in den Heissgaskanal der Turbine gespült wird, um den Eintritt von Heissgas und damit eine lokale Überhitzung zu verhindern. Bei der effektiven Verteilung und Steuerung der Kühlluft spielt die Abdichtung eine wichtige Rolle. Aufgrund von mechanischen und thermischen Spannungen und der thermischen Ausdehnung der Komponenten während des Betriebs verändern sich jedoch die abzudichtenden Spalte in ihren Abmessungen. Bei Stillstand der Maschine ist jedes rotierende und nicht rotierende Bauteil mit anderen Teilen unter Berücksichtigung von Fertigungs- und Montagetoleranzen sowie der erwarteten mechanischen und thermischen Verformung der Bauteile zusammengebaut. Die sich so ergebenden Kalt-Spalte ermöglichen im Betrieb die ungehinderte thermische Ausdehnung und rotationsbedingte Deformation der Bauteile, indem die dabei resultierenden Spalte, die sogenannten Warm-Spalte, nie unakzeptabel kleine Werte annehmen. Die ungehinderten Ausdehnungen und Deformationen verhindern bei jedem Bauteil mechanische Defekte an der Grenze zu anderen Bauteilen.

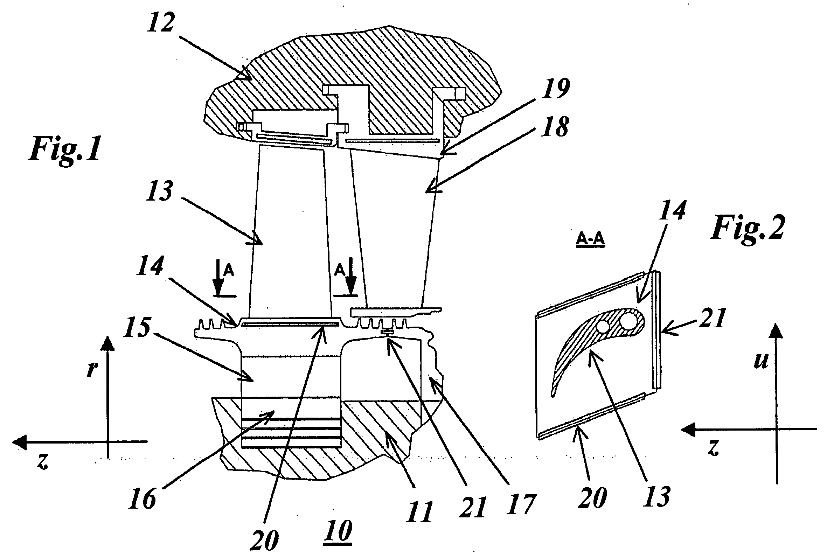

Unter Betriebsbedingungen können, abhängig von der thermischen und mechanischen Belastung des jeweiligen Bauteils, die resultierenden Warm-Spalte relativ zum Stillstand der Maschine kleiner oder grösser als die Kalt-Spalte werden. Ein Beispiel für derartige Änderungen bei einer Gasturbine ist in den Fig. 1-3 dargestellt. Fig. 1 zeigt in einem Ausschnitt eine typische Anordnung von Lauf- und Leitschaufeln in einer Gasturbine einschliesslich der zwischen den Bauteilen angeordneten, hier exemplarisch streifenförmig ausgeführten, Dichtungen. Die Gasturbine 10 der Fig. 1 umfasst einen Rotor 11 der mit Laufschaufeln 13 bestückt ist und von einem Turbinengehäuse oder Leitschaufelträger 12 umgeben ist. Die Laufschaufeln 13 weisen eine (innere) Plattform 14 (14') auf, unterhalb derer die Schaufel in einen Schaft 15 übergeht, an dessen Ende ein Schaufelfuss 16 angeordnet ist, mit dem die Laufschaufel 13 im Rotor 11 befestigt ist. Am Turbinengehäuse oder Leitschaufelträger 12 sind Leitschaufeln 18 angebracht, die eine (äussere) Plattform 19 haben. Die Schaufelblätter der Lauf- und Leitschaufeln 13, 18 liegen im Heissgaskanal der Turbine.

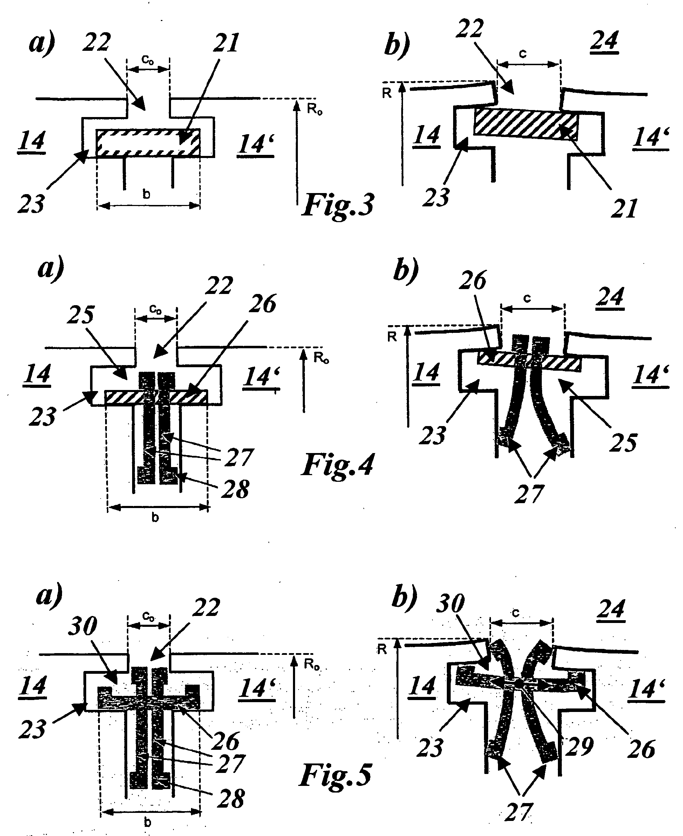

Zur Abdichtung gegenüber dem Heissgaskanal sind Dichtungen, hier exemplarisch als Dichtungsstreifen 20, 21 ausgeführt, vorgesehen (Fig. 2), die sich in axialer Richtung (z-Achse in Fig. 2) und in Umfangsrichtung (u-Achse in Fig. 2) erstrecken, aber auch in radialer Richtung erstrecken können und zwischen benachbarten Plattformen 14 (14') von Schaufeln beziehungsweise Schaufeln und benachbarten Hitzeschilden 13, 17 bzw. Ringsegmenten, sowie auch zwischen benachbarten Hitzeschilden (soweit vorhanden) angeordnet sind. Gemäss Fig. 3a liegen die Dichtungsstreifen 21 quer zum Spalt 22 zwischen den Plattformen 14 und 14' benachbarter Bauteile in einer entsprechenden Ausnehmung 23.

Wie in Fig. 3b exemplarisch angedeutet, wächst im Betrieb der Spalt zwischen den Laufschaufeln jeder Turbinenstufe. Unter Einfluss der Zentrifugalkräfte werden die Laufschaufeln in radialer Richtung gedehnt, was einen grösseren Spalt c in Umfangsrichtung zwischen den Plattformen der Schaufeln zur Folge hat.

Diese Vergrösserung des Spaltes in Umfangsrichtung wird teilweise kompensiert durch die thermische Ausdehnung der Schaufelplattformen. Abhängig von der Schaufelmasse und der Betriebstemperatur sind die thermischen Deformationen der Plattformen üblicherweise kleiner als die durch die Rotation hervorgerufenen Schaufeldeformationen. Daher kann der Spalt c zwischen den Schaufelplattformen langer Schaufeln in Umfangsrichtung im Betrieb entweder grösser sein als der Kalt-Spalt c₀ bei Stillstand der Maschine (Fig. 3a), oder er kann kleiner sein, was typischerweise für nicht rotierende Bauteile oder leichte Laufschaufeln gilt, deren Deformationen hauptsächlich durch die thermische Belastung bestimmt sind. Im Allgemeinen können die Spalte im Betrieb in Abhängigkeit von der mechanischen und thermischen Belastung der rotierenden und nicht rotierenden Bauteile der Maschine erheblich variieren. Weiterhin kann der Radius der Plattformen 14, 14', der im Stillstand die Grösse R₀ hat (Fig. 3a), während des Betriebs eine andere Grösse R (Fig. 3b) einnehmen.

Um die Spalte während des Betriebs der Maschine passiv zu regeln, sind an vielen Stellen der Maschine gemäss Fig. 2 axiale und in Umfangsrichtung verlaufende Dichtungen, hier exemplarisch als Streifen ausgeführt, 20 bzw. 21 vorgesehen, die eine unkontrollierte Leckage des Kühlmittels in den Heissgaskanal der Turbine verhindern. Die Dichtungen 20, 21 bestehen allgemein aus einer Legierung, die für die Betriebsbedingungen der Maschine geeignet ist.

Die in rotierenden Bauteilen angeordneten Dichtungen werden durch die Zentrifugalkräfte gegen die Plattformen der Laufschaufeln gepresst. Dadurch wird ein mechanischer Kontakt zwischen der Oberseite der Dichtung 21 und den äusseren Flanken der Dichtungsnut 23 innerhalb der Plattformen oder Hitzeschilde 14,14' erzeugt, der schematisch in Fig. 3b dargestellt ist. Aufgrund der thermischen Ausdehnung und rotationsbedingter Deformationen kann der effektive Warm-Spalt c (Fig. 3b) im Betrieb grösser werden, während die Breite b der Dichtung 21 aufgrund ihrer kleinen Abmessungen relativ zur Grösse der Schaufeln, des Rotors und der Hitzeschilde praktisch unverändert bleibt. Der erzeugte mechanische Kontakt kann sich auf der Dichtung auf eine schmale Kontaktfläche beschränken, was nicht gerade zur bestmöglichen Dichtungswirkung führt oder sogar aufgrund von lokalen Deformationen der Plattform zur ungewollten oder vergrösserten Leckage führen kann.

Im Stand der Technik sind bereits Überlegungen angestellt worden, Dichtungsverhältnisse in thermischen Maschinen durch den Einsatz von Gedächtnislegierungen gezielt zu steuern.

Aus der Druckschrift US 2007/0243061 A1 ist eine Anordnung aus einem Rotor und einem Stator einer Turbine bekannt, bei der Rotorschaufeln mit Schaufelblatt und (innerer) Plattform und Statorschaufeln mit Schaufelblatt und (innerer) Plattform einander abwechseln. Zwischen den Plattformen der Rotorschaufeln und den Plattformen der Statorschaufeln ist eine Dichtung definiert, wobei die Plattformen der Rotorschaufeln und/oder Statorschaufeln im Bereich der Dichtung teilweise aus einer Gedächtnislegierung bestehen, um den Kühlluftstrom durch die Dichtung temperaturabhängig zu steuern. Eine solche Steuerung durch die Plattformen selbst ist in Herstellung und Dimensionierung extrem aufwändig, weil die Schaufeln selbst aus unterschiedlichem Material aufgebaut und entsprechend konfektioniert werden müssen.

Die Druckschrift US 7,086,649 B2 offenbart eine ringförmige Dichtung für den Einsatz zwischen zwei relativ zueinander rotierenden Teilen. Die Dichtung umfasst einen Abschnitt, der sich zur Veränderung des Dichtungsspaltes verbiegen kann. Ein solcher Abschnitt kann aus einem Bimetall oder einer Gedächtnislegierung bestehen, um die Spaltbreite temperaturgesteuert zu verändern.

Aus der Druckschrift JP58206807 ist eine Vorrichtung zur Steuerung des Spiels zwischen der Schaufelspitze einer Laufschaufel und der gegenüberliegenden Wand einer Axialturbine bekannt, bei der die radiale Position der Wand mittels einer die Wand verschiebenden Spiralfeder aus einer Gedächtnismetalllegierung gesteuert wird.

Das Dokument JP 60111004 A offenbart eine Vorrichtung zur Einstellung des Spiels zwischen einer Laufschaufelspitze und der gegenüberliegenden Gehäusewand in einer Turbine mittels einer Feder aus einem Formgedächtnismaterial. Aus der Druckschrift DE 10 2007 001459 A1 ist eine Dichtung zwischen einem äusseren Deckband und einem äusseren Haltering einer Gasturbine bekannt, die aus einem Material mit Formgedächtnis hergestellt sein kann. EP 1 207 324 A2 befasst sich mit einer Fliehkraft-betätigten Dichtung zwischen zwei Teilen einer rotierenden Baugruppe einer Gasturbine. Zusätzlich kann die Dichtung eine Formgedächtnislegierung aufweisen, um die Dichtungswirkung zu verstärken. Weiterhin ist in GB 2 467 582 A eine Vibrationsdämpfungs-Anordnung beschrieben, bei der in Ausnehmungen eingesteckte, aus einer Formgedächtnislegierung bestehende Verbindungselemente zwischen benachbarten Schaufeln bei Überschreiten einer Temperatur expandieren und durch Reibung in der Ausnehmung die Vibrationen dämpfen. Die Druckschrift JP2009203948 A offenbart eine Dichtung mit mehreren Dichtungsplatten, deren mechanische Kopplung durch ein dazwischen liegendes Element aus einer Formgedächtnislegierung temperaturabhängig verändert wird. Im Dokument JP 59018209 A wird eine Labyrinthdichtung zwischen Rotorwelle und Gehäuse einer Turbine offenbart, bei der Rippen, welche in entsprechende Nuten auf der Rotorwelle eingreifen, zur temperaturabhängigen Einstellung des Spalts aus einer Formgedächtnislegierung bestehen, wobei die Rippen einseitig fixiert sind. Weiterer, weniger relevanter Stand der Technik ist in EP 2 000 709 A1, EP 1 602 864 A1 und EP 2 116 621 A2 beschrieben. Die eingangs beschriebenen Dichtungen sind nicht Gegenstand bekannter Vorschläge.

### DARSTELLUNG DER ERFINDUNG

Es ist eine Aufgabe der Erfindung, eine Dichtungsanordnung der eingangs genannten Art für eine thermische Maschine zu schaffen, die selbsttätig und auf einfache Weise den veränderten Bedingungen Rechnung trägt, wenn sich die Maschinenspalte zwischen Stillstand und Betrieb verändern.

Diese und andere Aufgaben werden durch die Gesamtheit der Merkmale der Ansprüche 1 oder 13 gelöst.

Die Erfindung geht aus von einer Dichtungsanordnung zur Abdichtung eines Spalts zwischen zwei benachbarten, thermisch und/oder mechanisch belasteten Bauteilen einer thermischen Maschine, insbesondere einer Turbomaschine bzw. Gasturbine, umfassend eine Dichtung, welche in einer sich quer zum Spalt erstreckenden, den Spalt durchquerenden Ausnehmung gelagert ist, wobei die Dichtung zumindest teilweise aus einer Gedächtnislegierung besteht, derart, dass sie bei Überschreiten einer vorgegebenen Grenztemperatur ihr Dichtungsverhalten ändert. Sie ist dadurch gekennzeichnet, dass die Dichtung jeweils wenigstens eine erste Komponente (insbesondere einen Horizontalstreifen) umfasst, welche in der sich quer zum Spalt erstreckenden Ausnehmung gelagert ist, dass die Dichtung weiterhin wenigstens eine zweite Komponente (insbesondere einen Vertikalstreifen) aufweist, die sich senkrecht zum Horizontalstreifen entlang des Spalts erstreckt, und dass zumindest die wenigstens eine zweite Komponente aus einer Gedächtnislegierung besteht.

Besonders vorteilhaft ist es, wenn die Dichtung zwei zweite Komponenten aufweist, die sich senkrecht zur ersten Komponente entlang des Spalts erstrecken, wenn beide zweiten Komponenten aus einer Gedächtnislegierung bestehen, und wenn beide zweiten Komponenten derart ausgebildet sind, dass sie bei Überschreiten der vorgegebenen Grenztemperatur an gegenüberliegenden Wänden des Spalts dichtend zur Anlage kommen. Hierdurch ist es möglich, über die Wirkung der ersten Komponente hinaus zusätzliche Dichtungswirkungen zu erzielen.

Eine Weiterbildung dieser Ausgestaltung ist dadurch gekennzeichnet, dass sich die zweiten Komponenten von der ersten Komponente aus im Wesentlichen zu einer Seite hin über die Ausnehmung hinaus in den Spalt erstrecken und dort bei Überschreiten der vorgegebenen Grenztemperatur eine zweite Dichtung bilden.

Eine andere Weiterbildung dieser Ausgestaltung ist dadurch gekennzeichnet, dass sich die zweiten Komponenten von der ersten Komponente aus zu entgegengesetzten Seiten hin über die Ausnehmung hinaus in den Spalt erstrecken und dort bei Überschreiten der vorgegebenen Grenztemperatur eine zweite und dritte Dichtung bilden.

Die erste Komponente kann dabei aus einer metallischen Legierung, beispielsweise Stahl, bestehen.

Es ist aber auch denkbar, dass die erste Komponente aus einer Gedächtnislegierung besteht. Auf diese Weise kann die erste Komponente auch zur Steuerung des Dichtungsverhaltens beitragen.

Eine andere Ausgestaltung der Erfindung ist dadurch gekennzeichnet, dass zwei erste Komponenten aus einer Gedächtnislegierung vorgesehen sind, welche bei Überschreiten der vorgegebenen Grenztemperatur an gegenüberliegenden Wänden der Ausnehmung dichtend zur Anlage kommen. Hierdurch können die gesteuerten Dichtungseigenschaften noch weiter verbessert werden.

Eine weitere Verbesserung kann erzielt werden, wenn gemäss einer anderen Ausgestaltung der Erfindung die aus einer Gedächtnislegierung bestehenden ersten und/oder zweiten Komponenten zur Verbesserung der Dichtungseigenschaften mit Aufdickungen (insbesondere Seitenwülsten) versehen sind.

Eine Ausgestaltung der erfindungsgemässen Dichtungsanordnung ist dadurch gekennzeichnet, dass zumindest eines der Bauteile eine Laufschaufel eines Rotors einer Turbomaschine ist.

Gemäss einer anderen Ausgestaltung sind beide Bauteile Laufschaufeln eines Rotors einer Turbomaschine.

Es ist aber auch denkbar, dass das andere Bauteil ein Hitzeschild (oder ein Ringsegment) eines Rotors einer Turbomaschine ist.

Eine andere Ausgestaltung der Erfindung zeichnet sich dadurch aus, dass die Bauteile jeweils eine Plattform aufweisen, und dass die Dichtungen zwischen den Plattformen in axialer und/oder Umfangsrichtung und/oder radialer Richtung verlaufend angeordnet ist.

Schliesslich ist es im Rahmen der Erfindung alternativ denkbar, dass die Dichtung jeweils wenigstens eine erste Komponente umfasst, welche in der sich quer zum Spalt erstreckenden Ausnehmung gelagert ist, dass die erste Komponente eine Durchlassöffnung aufweist, und dass die Durchlassöffnung durch einen Ventilstreifen aus einer Gedächtnislegierung verschlossen ist, derart, dass er bei Überschreiten einer vorgegebenen Grenztemperatur die Durchlassöffnung frei gibt. Auf diese Weise kann gezielt im Falle hoher thermischer Belastung lokal die Kühlung verändert werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt eine typische Anordnung von Lauf- und Leitschaufeln in einer Gasturbine einschliesslich der zwischen den Bauteilen angeordneten, hier exemplarisch streifenförmig ausgebildeten, Dichtungen;
- Fig. 2: den Schnitt durch die Laufschaufel aus Fig. 1 in der Ebene A-A;
- Fig. 3: das Verhalten eines herkömmlichen Dichtungsstreifens zwischen benachbarten Laufschaufeln bzw. Laufschaufel und benachbartem Hitzeschild bei Stillstand der Turbine und Zimmertemperatur (Fig. 3a) sowie bei Nenngeschwindigkeit und Betriebstemperatur (Fig. 3b);
- Fig. 4: das Verhalten einer zweifach dichtenden Dichtungsanordnung gemäss einem Ausführungsbeispiel der Erfindung zwischen benachbarten Laufschaufeln bzw. Laufschaufel und benachbartem Hitzeschild bei Stillstand der Turbine und Zimmertemperatur (Fig. 4a) sowie bei Nenngeschwindigkeit und Betriebstemperatur (Fig. 4b);
- Fig. 5: das Verhalten einer dreifach dichtenden Dichtungsanordnung gemäss einem anderen Ausführungsbeispiel der Erfindung zwischen benachbarten Laufschaufeln bzw. Laufschaufel und benachbartem Hitzeschild bei Stillstand der Turbine und Zimmertemperatur (Fig. 5a) sowie bei Nenngeschwindigkeit und Betriebstemperatur (Fig. 5b);
- Fig. 6: das Verhalten einer vierfach dichtenden Dichtungsanordnung gemäss einem weiteren Ausführungsbeispiel der Erfindung zwischen benachbarten Laufschaufeln bzw. Laufschaufel und benachbartem Hitzeschild bei Stillstand der Turbine und Zimmertemperatur (Fig. 6a) sowie bei Nenngeschwindigkeit und Betriebstemperatur (Fig. 6b); und
- Fig. 7: das Verhalten einer Dichtungsanordnung mit Ventilfunktion gemäss einem andren Ausführungsbeispiel der Erfindung zwischen Laufschaufel und benachbartem Hitzeschild bei Stillstand der Turbine und Zimmertemperatur (Fig. 7a) sowie bei Nenngeschwindigkeit und Betriebstemperatur (Fig. 7b).

### WEGE ZUR AUSFÜHRUNG DER ERFINDUNG

Ein wesentlicher Punkt der vorliegenden Erfindung besteht darin, die Dichtung ganz oder teilweise aus einer Gedächtnislegierung (Formgedächtnislegierung FGL) herzustellen. Oberhalb einer vorgegebenen Grenztemperatur, die niedriger sein kann als die Nenntemperatur, oder im Verlauf einer kontinuierlich steigenden Betriebstemperatur, wird der aus einer Gedächtnislegierung bestehende Teil der Dichtung aktiviert und verändert bzw. verbessert selbsttätig die Dichtungseigenschaften. Die Schrumpfungs-, Streckungs-, Torsions- und Biegedeformationen der Gedächtnislegierung schaffen einen Mechanismus zur Verbesserung der Dichtungseigenschaften bei einem einfachen, z.B. aus einem Stahl hergestellten Dichtungssystem, wie es in Fig. 3 in Form,des Dichtungsstreifens 21 gezeigt ist.

Fig. 4 zeigt ein Beispiel einer Dichtungsanordnung nach der Erfindung, die von einem Dichtungsstreifen 25 mit einem Horizontalstreifen 26 (erste Komponente) aus einem konventionellen Dichtungsmaterial ausgeht. Mit diesem Horizontalstreifen 26 sind zwei sich parallel nach unten erstreckende Vertikalstreifen 27 (zweite Komponenten) aus einer Gedächtnislegierung verbunden. Der Horizontalstreifen 26 ist, ähnlich wie der Dichtungsstreifen 21 in Fig. 3a, in einer quer zum Spalt 22 liegenden Ausnehmung 23 untergebracht (Fig. 4a). Bei einem Betrieb oberhalb der Grenztemperatur oder bei ansteigender Betriebstemperatur verbiegen sich die Vertikalstreifen 27 nach aussen zu der jeweils benachbarten Plattform 14 bzw.14'hin, um sich dort im mechanischen Kontakt dichtend anzulegen (Fig. 4b). Um diesen Deformationsprozess zu verstärken, können an den Enden der Vertikalstreifen 27 Seitenwülste 28 angeordnet werden, welche die kontaktgebende Deformation intensivieren. Die Vertikalstreifen 27 sind lang genug, um die notwendige Elastizität des gekoppelten Plattform-Dichtungs-Systems zu erreichen. Diese Elastizität stellt sicher, dass es zwischen den Schaufeln und den Dichtungen auch bei Vibrationen in der Turbinenstufe einen dauerhaften Kontakt gibt. Die sich gemäss Fig. 4b dichtend anlegenden Vertikalstreifen 27 schaffen neben den Horizontalstreifen 26 eine zweite Dichtung, so dass die Dichtungsanordnung gemäss Fig. 4 im Unterschied zur einstufigen Dichtungsanordnung der Fig. 3 eine zweistufige Dichtungsanordnung ist.

Um eine dreistufige Dichtungsanordnung zu schaffen, kann der Horizontalstreifen 26 gemäss Fig. 5 aus einer Gedächtnislegierung hergestellt werden. Oberhalb der Grenztemperatur oder bei stetig steigender Betriebstemperatur streckt sich der Horizontalstreifen 26 des Dichtungsstreifens 30 in entgegengesetzte horizontale Richtungen, um das grösser werdende Spiel c besser aufzufangen (Fig. 5b). Gleichzeitig folgenden die beiden Vertikalstreifen 27 aus der Gedächtnislegierung der Dehnung 29 des Horizontalstreifens 26 und trennen sich in Richtung auf die angrenzenden Plattformen 14 und 14'. Die Zentrifugalkräfte, die auf die Seitenwülste an den oberen Enden beider Vertikalstreifen 27 wirken, verbiegen diese nach aussen. Dieses Verbiegen erzeugt mechanische Kontakte mit den oberen Abschnitten der angrenzenden Plattformen 14 und 14', wie dies in Fig. 5b dargestellt ist. Die Biege- und Dehnungseigenschaften des Gedächtnislegierungs-Dichtungssystems ermöglicht so eine dreistufige Dichtungsanordnung mit nur einem Dichtungsstreifen 30.

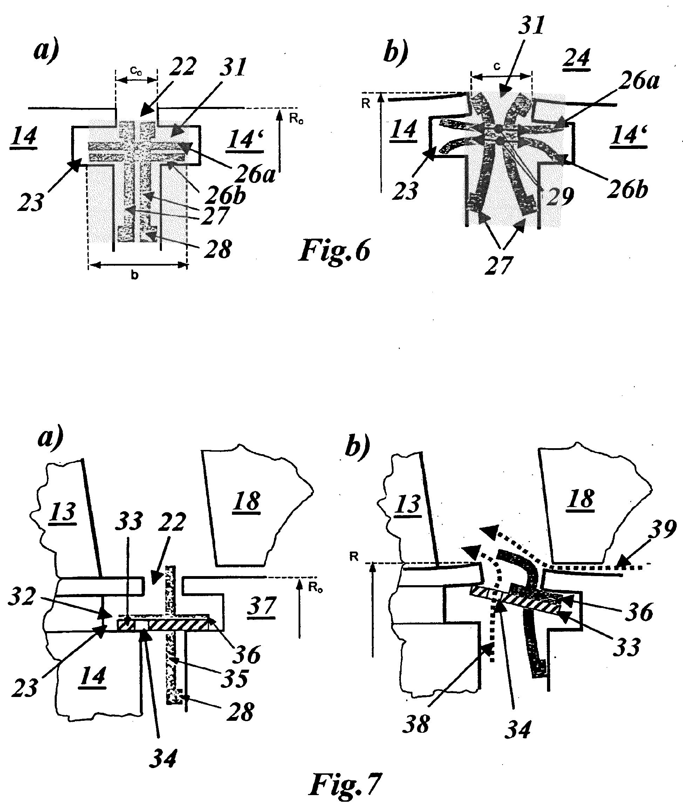

Bei den bisherigen Erläuterungen wurde auf die Fügetechniken zur Verbindung der einzelnen Streifen 26 und 27 untereinander nicht näher eingegangen. Es können jedoch alle möglichen Fügetechniken zur Herstellung der vorgeschlagenen Dichtungsanordnung eingesetzt werden. Auch müssen die im Einzelnen erläuterten Konfigurationen der Dichtungsstreifen nur als Beispiele verstanden werden, wobei die Dichtungen auch aus nicht streifenförmigen Elementen bzw. Komponenten bestehen können. Andere Konfigurationen der Dichtungsanordnung sind im Rahmen der Erfindung möglich und können andere Mechanismen der Deformation der Gedächtnislegierung beinhalten, sowie auch anders geformte Ausführungen und Kombinationen aus verschiedenen geometrischen Formen, die durch thermische, mechanische oder eine andere Belastung ausgelöst werden. So illustriert Fig. 6 beispielsweise eine Dichtungsanordnung mit einem Dichtungsstreifen 31, bei dem sich zwei Horizontalstreifen 26a und 26b aus einer Gedächtnislegierung bei einer thermischen Belastung oberhalb der Grenztemperatur oder bei stetig steigender Betriebstemperatur zuerst dehnen (Dehnung 29 in Fig. 6b) und dann in entgegengesetzte radiale Richtungen verbogen werden. Auf diese Weise wird eine zusätzliche vierte Dichtungsstufe zwischen den benachbarten Schaufeln erreicht.

Die eingesetzte Gedächtnislegierung kann aus verschiedenen metallurgischen Zusammensetzungen verschiedene Elemente bestehen und auf unterschiedliche Weise hergestellt sein. Die Temperatur und/oder die von den Betriebsbedingungen der Maschine abhängige mechanische Veränderung initiieren den Prozess der Geometrieänderung des Streifens aus der Gedächtnislegierung, der von der Herstellung der Gedächtnislegierung abhängt. Im Fall einer Abnahme des Kalt-Spaltes c₀ wird das Schrumpfverhalten des Gedächtnislegierungsstreifens berücksichtigt, und zwar anstelle einer Dehnung, wie sie hier beschrieben worden ist.

Die vorgeschlagene, mit einer Gedächtnislegierung arbeitende Dichtungsanordnung kann auch in allen anderen Maschinen eingesetzt werden, wo eine aktive Leckagekontrolle notwendig ist. So kann eine solche Dichtungsanordnung z.B. in Kryo-Apparaturen wie zum Beispiel Helium- und/oder Wasserstoffverflüssigern oder z.B. Kälteanlagen mit Betriebstemperaturen unter dem Gefrierpunkt eingesetzt werden. In diesem Fall ist eine Reduzierung der Betriebstemperatur der Hauptmechanismus, der die aktive Leckagekontrolle mit der Dichtungsanordnung steuert.

Die FGL-Dichtungsanordnung der Erfindung kann auch mit zusätzlichen Noteigenschaften ausgestattet werden. Oberhalb einer zulässigen Temperatur kann sich die FGL-Dichtungsanordnung beispielsweise öffnen, um einen überhitzten Bereich eines ausgewählten Bauteils mit mehr Kühlmittel zu versorgen. Ein solches System kann in Kühlkanälen der Maschine oder innerhalb von Kühlkanälen eines heissen Bauteils angeordnet werden. Eine andere Notfunktion einer solchen FGL-Dichtungsanordnung kann darin bestehen, sich oberhalb einer zulässigen Temperatur, die aufgrund eines Eintritts von Heissgas überschritten wird, zu öffnen, um z.B. eine lokale Überhitzung der Schaufelplattform oder eines anderen Bauteils sowie der Dichtungsanordnung selbst zu vermeiden. Eine solche Funktion vermeidet die Zerstörung der Dichtungsanordnung durch Selbstöffnung.

Die Dichtungsanordnung kann sich verändern in Reaktion auf eine zu hohe Metalltemperatur der Plattform oder eine zu hohe Gastemperatur, bedingt durch einen Heissgasstrom (39 in Fig. 7b) z.B. zwischen der Oberseite eines Hitzeschildes (37 in Fig. 7) und der Spitze der Leitschaufel (18 in Fig. 7). Als eine von vielen möglichen Konfigurationen zeigt Fig. 7 exemplarisch eine Dichtungsanordnung mit einem Dichtungsstreifen 32, der solche Noteigenschaften aufweist. Oberhalb der Grenztemperatur schrumpft ein Ventilstreifen 36, der bei Stillstand der Maschine eine Öffnung 34 in einem darunter liegenden Basisstreifen beziehungsweise Horizontalstreifen 33 (aus Stahl) abdeckt, und öffnet diese (vorzugsweise schlitzförmige) Öffnung 34, um einen ungehinderten Kühlmittelstrom in den heissen Schaufelkanal einzulassen. Der obere Teil des Vertikalstreifens 35 aus Gedächtnislegierung verbiegt sich, um den Kühlluftstrom 38 zu den überhitzten Bereichen der Plattform 14 und der Laufschaufel 13 zu lenken. Gleichzeitig lenkt der verbogene Vertikalstreifen 35 den Heissgasstrom 39 von dem überhitzten Bereich weg. Die letztgenannte Eigenschaft kann auch im Zusammenhang mit einem Horizontalstreifen aus Stahl ohne Öffnung 34 eingesetzt werden. Der überhitzte Bereich wird dann durch den verbogenen Vertikalstreifen geschützt, indem der Heissgasstrom 39 zum oberen Teil der Schaufel in abgelenkt wird.

Insgesamt ergeben sich mit der Erfindung die folgenden zusätzlichen Eigenschaften und Vorteile:
- die Dichtungsanordnung kann in unterschiedlichen Maschinen eingesetzt werden, deren benachbarte Bauteile sich im Betrieb aufgrund diverser monotoner und/oder zyklischer Belastungen zwischen Stillstand, Teillast, Nennlast und/oder Überlast unterschiedlich ausdehnen;
- die Dichtungsanordnung kann je nach Bedarf die Abdichtung verstärken oder sich öffnen;
- die Dichtungsanordnung kann zwischen benachbarten Bauteilen aus gleichem oder unterschiedlichem Material eingesetzt werden;
- die Dichtungsanordnung kann das Dichtungsverhalten verbessern;
- die Dichtungsanordnung kann als Notventil wirken, welches eine zusätzliche Kühlung eines überhitzten Bereiches eines geschützten Bauteils bewirkt, wenn das System eine Grenze in der Temperatur, im Druck, in der zentrifugalen Belastung oder einem anderen Parameter überschreitet;
- die Lebensdauer der betreffenden Bauteile wird dadurch verlängert;
- der dadurch bewirkte höhere Kühlmittelverbrauch der Maschine kann als Parameter zur Überwachung und gegebenenfalls Abschaltung der Maschine benutzt werden.

### BEZUGSZEICHENLISTE

- 10: Gasturbine (Turbomaschine)
- 11: Rotor
- 12: Turbinengehäuse
- 13: Laufschaufel
- 14, 14', 19: Plattform
- 15: Schaft
- 16: Schaufelfuss
- 17: Nachbarschaufel (oder Hitzeschild)
- 18: Leitschaufel
- 20,21: Dichtung
- 22: Spalt
- 23: Ausnehmung (Nut)
- 24: Heissgaskanal
- 25,30,31: Dichtung
- 26,26a,b: Komponente (z.B. Horizontalstreifen
- 27: Komponente (z.B. Vertikalstreifen)
- 28: Aufdickung (z.B. Seitenwulst)
- 29: Dehnung
- 32: Dichtung
- 33: Komponente (z.B. Basisstreifen/Horizontalstreifen)
- 34: Durchlassöffnung
- 35: Komponente (z.B. Vertikalstreifen )
- 36: Ventilstreifen
- 37: Hitzeschild
- 38: Kühlluftstrom
- 39: Heissgasstrom
- b: Breite
- c₀: Kalt-Spalt
- c: Warm-Spalt
- u: Umfangsrichtung
- r: radiale Richtung
- R,R₀,R': Radius
- z: axiale Richtung

## Patentansprüche

1. Dichtungsanordnung zur Abdichtung eines Spalts (22) zwischen zwei benachbarten, thermisch und/oder mechanisch belasteten Bauteilen (13, 17, 37) einer thermischen Maschine, insbesondere einer Turbomaschine bzw. Gasturbine (10), umfassend eine Dichtung (26, 30, 31, 32), welche in einer sich quer zum Spalt (22) erstreckenden, den Spalt (22) durchquerenden Ausnehmung (23) gelagert ist, wobei die Dichtung (25, 30, 31, 32) zumindest teilweise aus einer Gedächtnislegierung besteht, derart, dass sie bei Überschreiten einer vorgegebenen Grenztemperatur ihr Dichtungsverhalten ändert, **dadurch gekennzeichnet, dass** die Dichtung (25, 30, 31, 32) jeweils wenigstens eine erste Komponente (26, 26a,b, 33) umfasst, welche in der sich quer zum Spalt (22) erstreckenden Ausnehmung (23) gelagert ist, dass die Dichtung (25, 30, 31, 32) weiterhin wenigstens eine zweite Komponente (27, 35) aufweist, die sich senkrecht zur ersten Komponente (28, 26a,b, 33) entlang des Spalts (22) erstreckt, und dass zumindest die wenigstens eine zweite Komponente (27, 35) aus einer Gedachtnislegierung besteht.

2. Dichtungsanordnung nach Anspruch 1, **dadurch gekennzeichnet, dass** die Dichtung (25, 30, 31) zwei zweite Komponenten (27) aufweist, die sich senkrecht zur ersten Komponente (26, 26a,b) entlang des Spalts (22) erstrecken, dass beide zweiten Komponenten (27) aus einer Gedächtnislegierung bestehen, und dass beide zweiten Komponenten (27) derart ausgebildet sind, dass sie bei Überschreiten der vorgegebenen Grenztemperatur an gegenüberliegenden Wänden des Spalts (22) dichtend zur Anlage kommen.

3. Dichtungsanordnung nach Anspruch 2, **dadurch gekennzeichnet, dass** sich die zweiten Komponenten (27) von der ersten Komponente (26, 26a,b) aus im Wesentlichen zu einer Seite hin über die Ausnehmung (23) hinaus in den Spalt (22) erstrecken und dort bei Überschreiten der vorgegebenen Grenztemperatur eine zweite Dichtung bilden.

4. Dichtungsanordnung nach Anspruch 2, **dadurch gekennzeichnet, dass** sich die zweiten Komponenten (27) von der ersten Komponente (26, 26a,b) aus zu entgegengesetzten Seiten hin über die Ausnehmung (23) hinaus in den Spalt (22) erstrecken und dort bei Überschreiten der vorgegebenen Grenztemperatur eine zweite und dritte Dichtung bilden.

5. Dichtungsanordnung nach einem der Ansprüche 1-4, **dadurch gekennzeichnet, dass** die erste Komponente (26, 33) aus einer metallischen Legierung besteht.

6. Dichtungsanordnung nach einem der Ansprüche 1-4, **dadurch gekennzeichnet, dass** die erste Komponente (26) aus einer Gedächtnislegierung besteht.

7. Dichtungsanordnung nach einem der Ansprüche 1-4, **dadurch gekennzeichnet, dass** zwei erste Komponenten (26) aus einer Gedächtnislegierung vorgesehen sind, welche bei Überschreiten der vorgegebenen Grenztemperatur an gegenüberliegenden Wänden der Ausnehmung (23) dichtend zur Anlage kommen.

8. Dichtungsanordnung nach einem der Ansprüche 1-7, **dadurch gekennzeichnet, dass** die aus einer Gedächtnislegierung bestehenden ersten und/oder zweiten Komponenten (26, 26a,b, 27, 35) zur Verbesserung der Dichtungseigenschaften mit Aufdickungen (28) versehen sind.

9. Dichtungsanordnung nach einem der Ansprüche 1-8, **dadurch gekennzeichnet, dass** zumindest eines der Bauteile (13, 17, 37) eine Laufschaufel (13) eines Rotors (11) einer Turbomaschine (10) ist.

10. Dichtungsanordnung nach Anspruch 9, **dadurch gekennzeichnet, dass** beide Bauteile (13, 17) Laufschaufeln eines Rotors (11) einer Turbomaschine (10) sind.

11. Dichtungsanordnung nach Anspruch 9, **dadurch gekennzeichnet, dass** das andere Bauteil ein Hitzeschild (37) eines Rotors (11) einer Turbomaschine (10) ist.

12. Dichtungsanordnung nach einem der Ansprüche 1-11, **dadurch gekennzeichnet, dass** die Bauteile (13, 17, 37) jeweils eine Plattform (14) aufweisen, und dass die Dichtung (25, 30, 31, 32) zwischen den Plattformen (14) in axialer und/oder Umfangsrichtung und/oder radialer Richtung verlaufend angeordnet ist.

13. Dichtungsanordnung zur Abdichtung eines Spalts (22) zwischen zwei benachbarten, thermisch und/oder mechanisch belasteten Bauteilen (13, 17, 37) einer thermischen Maschine, insbesondere einer Turbomaschine bzw. Gasturbine (10), umfassend eine Dichtung (25, 30, 31, 32), welche in einer sich quer zum Spalt (22) erstreckenden, den Spalt (22) durchquerenden Ausnehmung (23) gelagert ist, wobei die Dichtung (25, 30, 31, 32) zumindest teilweise aus einer Gedächtnislegierung besteht, derart, dass sie bei Überschreiten einer vorgegebenen Grenztemperatur ihr Dichtungsverhalten ändert, **dadurch gekennzeichnet, dass** die Dichtung (32) jeweils wenigstens eine erste Komponente (33) umfasst, welche in der sich quer zum Spalt (22) erstreckenden Ausnehmung (23) gelagert ist, dass die erste Komponente (33) eine Durchlassöffnung (34) aufweist, und dass die Durchlassöffnung (34) durch einen Ventilstreifen (36) aus einer Gedächtnislegierung verschlossen ist, derart, dass er bei Überschreiten einer vorgegebenen Grenztemperatur die Durchlassöffnung (34) frei gibt.

## Claims

1. Sealing arrangement for sealing a gap (22) between two adjacent, thermally and/or mechanically loaded components (13, 17, 37) of a thermal machine, especially a turbomachine or gas turbine (10), comprising a seal (25, 30, 31, 32) which is supported in a recess (23) which extends transversely to the gap (22) and traverses said gap (22), wherein the seal (25, 30, 31, 32) consists at least partially of a memory alloy in such a way that when a prespecified temperature limit is exceeded it changes its sealing behavior, **characterized in that** the seal (25, 30, 31, 32) comprises in each case at least one first component (26, 26a,b, 33) which is supported in the recess (23) which extends transversely to the gap (22), **in that** the seal (25, 30, 31, 32) furthermore has at least one second component (27, 35) which extends along the gap (22) perpendicularly to the first component (26, 26a,b, 33), and **in that** at least the at least one second component (27, 35) consists of a memory alloy.

2. Sealing arrangement according to Claim 1, **characterized in that** the seal (25, 30, 31) has two second components (27) which extend along the gap (22) perpendicularly to the first component (26, 26a,b), **in that** both second components (27) consist of a memory alloy, and **in that** both second components (27) are formed in such a way that when a prespecified temperature limit is exceeded it comes to bear against opposite walls of the gap (22) with sealing effect.

3. Sealing arrangement according to Claim 2, **characterized in that** the second components (27) extend from the first component (26, 26a,b) essentially towards one side beyond the recess (23) into the gap (22) and when a prespecified temperature limit is exceeded form a second seal there.

4. Sealing arrangement according to Claim 2, **characterized in that** the second components (27) extend from the first component (26, 26a,b) towards opposite sides beyond the recess (23) into the gap (22) and when a prespecified temperature limit is exceeded form a second and third seal there.

5. Sealing arrangement according to one of Claims 1 - 4, **characterized in that** the first component (26, 33) consists of a metal alloy.

6. Sealing arrangement according to one of Claims 1 - 4, **characterized in that** the first component (26) consists of a memory alloy.

7. Sealing arrangement according to one of Claims 1 - 4, **characterized in that** provision is made for two first components (26) consisting of a memory alloy, which when a prespecified temperature limit is exceeded come to bear against opposite walls of the recess (23) with sealing effect.

8. Sealing arrangement according to one of Claims 1 - 7, **characterized in that** the first and/or second components (26, 26a,b, 27, 35) consisting of a memory alloy are provided with thickened portions (28) for improving the sealing characteristics.

9. Sealing arrangement according to one of Claims 1 - 8, **characterized in that** at least one of the components (13, 17, 37) is a rotor blade (13) of a rotor (11) of a turbomachine (10).

10. Sealing arrangement according to Claim 9, **characterized in that** both components (13, 17) are rotor blades of a rotor (11) of a turbomachine (10).

11. Sealing arrangement according to Claim 9, **characterized in that** the other component is a heat shield (37) of a rotor (11) of a turbomachine (10).

12. Sealing arrangement according to one of Claims 1 - 11, **characterized in that** the components (13, 17, 37) have a platform (14) in each case, and **in that** the seal (25, 30, 31, 32) is arranged in a manner extending between the platforms (14) in the axial direction and/or circumferential direction and/or radial direction.

13. Sealing arrangement for sealing a gap (22) between two adjacent, thermally and/or mechanically loaded components (13, 17, 37) of a thermal machine, especially a turbomachine or gas turbine (10), comprising a seal (25, 30, 31, 32) which is supported in a recess (23) which extends transversely to the gap (22) and traverses said gap (22), wherein the seal (25, 30, 31, 32) consists at least partially of a memory alloy in such a way that when a prespecified temperature limit is exceeded it changes its sealing behavior, **characterized in that** the seal (32) comprises in each case at least one first component (33) which is supported in the recess (23) which extends transversely to the gap (22), **in that** the first component (33) has an opening (34), and **in that** the opening (34) is closed off by means of a valve strip (36) consisting of a memory alloy in such a way that when a prespecified temperature limit is exceeded it frees the opening (34).

## Revendications

1. Agencement de joint d'étanchéité pour l'étanchéité d'un interstice (22) entre deux composants adjacents (13, 17, 37) sollicités thermiquement et/ou mécaniquement, d'une machine thermique, en particulier d'une turbomachine ou d'une turbine à gaz (10), comprenant un joint d'étanchéité (25, 30, 31, 32) qui est supporté dans un évidement (23) s'étendant transversalement à l'interstice (22), traversant l'interstice (22), le joint d'étanchéité (25, 30, 31, 32) se composant au moins en partie d'un alliage à mémoire de forme de telle sorte qu'il modifie son comportement d'étanchéité en cas de dépassement d'une température limite prédéfinie, **caractérisé en ce que** le joint d'étanchéité (25, 30, 31, 32) comprend à chaque fois au moins un premier composant (26, 26a,b, 33) qui est supporté dans l'évidement (23) s'étendant transversalement à l'interstice (22), **en ce que** le joint d'étanchéité (25, 30, 31, 32) présente en outre au moins un deuxième composant (27, 35) qui s'étend transversalement au premier composant (26, 26a,b, 33) le long de l'interstice (22) et **en ce qu'**au moins l'au moins un deuxième composant (27, 35) se compose d'un alliage à mémoire de forme.

2. Agencement de joint d'étanchéité selon la revendication 1, **caractérisé en ce que** le joint d'étanchéité (25, 30, 31) présente deux deuxièmes composants (27) qui s'étendent perpendiculairement au premier composant (26, 26a,b) le long de l'interstice (22), **en ce que** les deux deuxièmes composants (27) se composent d'un alliage à mémoire de forme et **en ce que** les deux deuxièmes composants (27) sont réalisés de telle sorte qu'ils viennent en appui hermétiquement contre des parois opposées de l'interstice (22) lors du dépassement de la température limite prédéfinie.

3. Agencement de joint d'étanchéité selon la revendication 2, **caractérisé en ce que** les deuxièmes composants (27) s'étendent dans l'interstice (22) depuis le premier composant (26, 26a,b) essentiellement vers un côté au-delà de l'évidement (23) et y forment un deuxième joint d'étanchéité dans le cas d'un dépassement de la température limite prédéfinie.

4. Agencement de joint d'étanchéité selon la revendication 2, **caractérisé en ce que** les deuxièmes composants (27) s'étendent dans l'interstice (22) depuis le premier composant (26, 26a,b) vers des côtés opposés au-delà de l'évidement (23) et y forment un deuxième et un troisième joint d'étanchéité dans le cas d'un dépassement de la température limite prédéfinie.

5. Agencement de joint d'étanchéité selon l'une quelconque des revendications 1 à 4, **caractérisé en ce que** le premier composant (26, 33) se compose d'un alliage métallique.

6. Agencement de joint d'étanchéité selon l'une quelconque des revendications 1 à 4, **caractérisé en ce que** le premier composant (26) se compose d'un alliage à mémoire de forme.

7. Agencement de joint d'étanchéité selon l'une quelconque des revendications 1 à 4, **caractérisé en ce que** deux premiers composants (26) constitués d'un alliage à mémoire de forme sont prévus, lesquels viennent s'appliquer hermétiquement contre des parois opposées de l'évidement (23) dans le cas d'un dépassement de la température limite prédéfinie.

8. Agencement de joint d'étanchéité selon l'une quelconque des revendications 1 à 7, **caractérisé en ce que** les premiers et/ou les deuxièmes composants constitués d'un alliage à mémoire de forme (26, 26a,b, 27, 35) sont pourvus d'épaississements (28) pour améliorer les propriétés d'étanchéité.

9. Agencement de joint d'étanchéité selon l'une quelconque des revendications 1 à 8, **caractérisé en ce qu'**au moins l'un des composants (13, 17, 37) est une aube mobile (13) d'un rotor (11) d'une turbomachine (10).

10. Agencement de joint d'étanchéité selon la revendication 9, **caractérisé en ce que** les deux composants (13, 17) sont des aubes mobiles d'un rotor (11) d'une turbomachine (10).

11. Agencement de joint d'étanchéité selon la revendication 9, **caractérisé en ce que** l'autre composant est un bouclier thermique (37) d'un rotor (11) d'une turbomachine (10).

12. Agencement de joint d'étanchéité selon l'une quelconque des revendications 1 à 11, **caractérisé en ce que** les composants (13, 17, 37) présentent à chaque fois une plate-forme (14) et **en ce que** le joint d'étanchéité (25, 30, 31, 32) est disposé entre les plates-formes (14) de manière à s'étendre dans la direction axiale et/ou périphérique et/ou dans la direction radiale.

13. Agencement de joint d'étanchéité pour l'étanchéité d'un interstice (22) entre deux composants adjacents (13, 17, 37) sollicités thermiquement et/ou mécaniquement, d'une machine thermique, en particulier d'une turbomachine ou d'une turbine à gaz (10), comprenant un joint d'étanchéité (25, 30, 31, 32) qui est supporté dans un évidement (23) s'étendant transversalement à l'interstice (22), traversant l'interstice (22), le joint d'étanchéité (25, 30, 31, 32) se composant au moins en partie d'un alliage à mémoire de forme de telle sorte qu'il modifie son comportement d'étanchéité en cas de dépassement d'une température limite prédéfinie, **caractérisé en ce que** le joint d'étanchéité (32) comprend à chaque fois au moins un premier composant (33) qui est supporté dans l'évidement (23) s'étendant transversalement à l'interstice (22), **en ce que** le premier composant (33) présente une ouverture de passage (34) et **en ce que** l'ouverture de passage (34) est fermée par un ruban de soupape (36) en alliage à mémoire de forme de telle sorte qu'il libère l'ouverture de passage (34) lors du dépassement d'une température limite prédéfinie.
